# EUROPÄISCHE PATENTSCHRIFT

(11) **EP 2 110 294 B1**
(45) Veröffentlichungstag und Bekanntmachung des Hinweises auf die Patenterteilung: **26.03.2014**
(21) Anmeldenummer: 09001276.6
(22) Anmeldetag: 30.01.2009
(51) Int. Cl.: A61G 5/04, A61G 5/06, B62B 5/02

(54) **Treppensteig- und Transportvorrichtung**
Stair-climbing and transport device
Dispositif d'ascension des escaliers et de transport

(30) Priorität: 17.04.2008 DE 202008005311 U
(43) Veröffentlichungstag der Anmeldung: 21.10.2009
(73) Patentinhaber: AAT Alber Antriebstechnik GmbH, 72458 Albstadt (DE)
(72) Erfinder: Alber, Markus, 72458 Albstadt (DE)
(74) Vertreter: Kohler Schmid Möbus

(56) Entgegenhaltungen:
- EP-A- 0 800 977
- DE-A1- 19 519 109
- DE-U1- 20 116 026
- DE-U1-202007 006 453
- US-A- 4 109 740
- US-B1- 6 341 784

## Beschreibung

Die Erfindung betrifft eine Treppensteig- und Transportvorrichtung zum Transport von Gegenständen jedweder Art und/oder Personen, mit einer Rahmenkonstruktion, an der neben einer Lastaufnahmeeinrichtung für den zu transportierenden Gegenstand und/oder für die zu transportierende Person Laufräder, Lenkräder und Bedienelemente vorgesehen sind, wobei im Bereich der Laufräder mindestens ein Rollkörper vorgesehen ist, der in einer ersten Lage bei Auflage der Laufräder auf einer Bodenoberfläche von der Bodenoberfläche beabstandet ist, und in einer zweiten Lage auf der Bodenoberfläche, die Last der Treppensteig- und Transportvorrichtung aufnehmend, aufliegt und dabei gleichzeitig die Laufräder von der Bodenoberfläche beabstandet sind.

Derartige Treppensteig- und Transportvorrichtungen können zum Transport von Gegenständen jedweder Art und/oder Personen insbesondere zum Transport über eine Treppe verwendet werden. Eine derartige Treppensteig- und Transportvorrichtung ist zum Beispiel aus der DE 195 19 109 A1 bekannt geworden. Darin erfolgt ein Treppenauf- oder Abstieg durch das zyklische Abstützen von Trägern bzw. an deren Enden befestigte Stützelemente auf aufeinander folgende Trittstufen sowie damit verbundenes, synchrones Hochstemmen der Treppensteig- und Transportvorrichtung um die entsprechende Höhe der Setzstufe auf die nächstgelegene Treppenstufe durch einen elektromotorischen Antrieb.

Das in diesem Fall aus zwei Trägern und an deren Enden vorgesehenen Stützrädern bestehende Stütz- und Stemmelement kann in speziellen Ausführungsformen auch andersartig ausgebildetes sein. So zum Beispiel das Steigbein der von der Firma AAT Alber Antriebstechnik GmbH vertriebenen Treppensteig- und Transportvorrichtung mit dem Namen "s-max". Es führt eine von einer elektromechanischen Treppensteigvorrichtung gesteuerte Bewegung nach obig angedeutetem Prinzip durch, um den Treppenauf- und Treppenabstieg vorzunehmen.

Durch die relative Größe der Laufräder solcher Treppensteig- und Transportvorrichtungen haben sich in der Vergangenheit Probleme bei der Manövrierfähigkeit auf engerem Raum ergeben. Es konnte beispielsweise keine parallele Verschiebung der Treppensteig- und Transportvorrichtung vorgenommen werden, ohne mehrmalig hin- und her zu rangieren. Deshalb wurde, wie aus der DE 20 2007 006 453 U1, die als nächstliegender Stand der Technik betrachtet wird, bekannt, im Bereich der Laufräder mindestens ein Rollkörper angebracht, der in einer ersten Lage bei Auflage der Laufräder auf einer Bodenoberfläche von der Bodenoberfläche beabstandet ist, und in einer zweiten Lage auf der Bodenoberfläche, die Last der Treppensteig- und Transportvorrichtung aufnehmend, aufliegt und dabei gleichzeitig die Laufräder von der Bodenoberfläche beabstandet sind. Dies ermöglicht es, die Treppensteig- und Transportvorrichtung in der zweiten Lage im Zusammenspiel mit den Lenkrädern auch bei engen Platzverhältnissen uneingeschränkt in der Ebene zu verfahren. Es kann beispielsweise eine Drehung der Treppensteig- und Transportvorrichtung um deren Hochachse an Ort und Stelle vorgenommen werden. In der ersten Lage ist die Treppensteig- und Transportvorrichtung wie bekannt zu benutzen.

Die US 6,341,784 B1 offenbart weiterhin eine motorbetriebene Steigvorrichtung zur Beförderung von Rollstühlen. Der Rollstuhl ist dabei an der Steigvorrichtung befestigbar. Diese weist ein Gehäuse auf, in dem mehrere Steigbeine über einen Kettenantrieb bewegbar angeordnet sind. An dem Gehäuse ist ein Ausleger angeordnet, der ein Überkippen der Steigvorrichtung im Falle einer ungünstigen Gewichtsverlagerung verhindern soll.

Aus der US 4,109,740 A ist eine Treppensteigvorrichtung bekannt, die mehrere, über zwei Ketten angetriebene Steigbeine aufweist. An der Treppensteigvorrichtung sind Laufräder angeordnet. Im Bereich der Laufräder sind Rollkörper vorgesehen. Die Rollkörper dienen als Sensoren, die ein Überfahren einer Treppenkante verhindern sollen.

Bisherige Ausführungen von Treppensteig- und Transportvorrichtungen verfügen einerseits über elektromotorisch angetriebene Treppensteigvorrichtungen, die sich unterschiedlicher Kinematiken bedienen, um die Steigbewegung durchzuführen und andererseits, im Falle dass dies gewünscht ist, über eine weitere elektromotorisch angetriebene Kinematik, die den Einsatz der Rollkörper zum Zwecke der verbesserten Manövrierfähigkeit steuert. Abgesehen davon, dass derartige Lösungen durch ihre beiden separaten Antriebsmechanismen möglicherweise sehr kostenintensiv sind, kann die relativ hohe Komplexität einer solchen Treppensteig- und Transportvorrichtung auch zu einem höheren Wartungsaufwand führen.

Aufgabe der Erfindung ist es demgegenüber, eine Treppensteig- und Transportvorrichtung bereitzustellen, die sowohl ein sicheres Treppensteigen als auch ein Drehen auf engem Raum ermöglicht.

Die Aufgabe wird erfindungsgemäß dadurch gelöst, dass am freien Ende des Steigbeins zwei voneinander beabstandete Auflager vorgesehen sind, wobei das erste Auflager in einem drehfesten Stützkörper endet und das zweite Auflager den drehbaren Rollkörper aufweist, wobei das erste Auflager in zwei voneinander beabstandeten Stützkörpern endet, die zum zyklischen Abstützen auf aufeinanderfolgenden Trittstufen sowie synchronen Hochstemmen der Treppensteig- und Transportvorrichtung um die entsprechende Höhe der Setzstufe ausgebildet sind.

Der wesentliche Vorteil ist dabei, dass dann nur noch ein einziger Antriebsmechanismus benötigt wird, der sowohl weiterhin die Treppensteigfunktion übernimmt, als auch das entsprechende Steigbein derart verfahren kann, dass die Rollkörper wie für die zweite Lage kennzeichnend, das Verfahren der Treppensteig- und Transportvorrichtung auf engem Raum ermöglichen. Weiterhin vereinfacht sich natürlich die Bauweise durch die Kompaktheit der erfindungsgemäßen Lösung.

Das erste Auflager endet in zwei voneinander beabstandeten Stützkörpern, sodass das erste Auflager material- und gewichtssparender ausgeführt werden kann, als wenn es aus einem einzigen breiten Stützkörper hergestellt würde. Die seitliche Kippstabilität wird dadurch weiterhin beibehalten bzw. kann bei gleichem Materialeinsatz wie im Falle eines einzigen breiten Auflagers durch das Aufspannen einer größeren Beabstandung der zwei Stützkörper relativ gesehen vergrößert werden.

Weist das zweite Auflager zwei voneinander beabstandete Rollkörper auf, so bedeutet dies beim Aufliegen dieser beiden Rollkörper auf der Bodenoberfläche, also einer Nutzung der Rollkörper nach der zweiten Lage, eine erhöhte Kippstabilität verglichen mit einer Ausführungsform, bei der nur ein Rollkörper vorgesehen ist.

Weist der zwischen erstem und zweitem Auflager ausgebildete Steg eine abgewinkelte Form auf oder weisen die zwischen ersten und zweiten Auflagern ausgebildeten Stege eine abgewinkelte Form auf, so erhöht dies die Kompaktheit des oder der Steigbeine und somit auch die Kompaktheit der Treppensteig- und Transportvorrichtung. Dies ist bezüglich des Bewegungsablaufs des Steigbeins beim Treppensteigen von Vorteil. Das oder die Steigbeine sind dann beispielsweise leichter und einfacher am elektromechanischen Antriebssystem der Treppensteigeinrichtung vorbeizuführen. Des Weiteren ist eine abgewinkelte Form verglichen mit einer geraden Form, die weiter oben am Steigbein ansetzt, material- und gewichtssparender und am Steigbein auftretende Momente können optimiert aufgenommen werden.

Ist der Rollkörper oder sind die Rollkörper an deren entsprechenden zweiten Auflagern lösbar vorgesehen, so hat dies den Vorteil eines möglichen Austauschens der Rollkörper. Die Auswechslung eines abgenutzten oder defekten Rollkörpers ist dann ohne größeren Aufwand möglich und die allgemeine Wartbarkeit der Treppensteig- und Transportvorrichtung ist verbessert.

Liegt der mindestens eine Rollkörper über eine drehbare Kugel, ein Rad, einen Wälzkörper oder dergleichen auf der Bodenoberfläche auf, so ist eine individuelle Anpassung des Rollkörpers an die lokalen Bodenverhältnisse möglich. Wird die Treppensteig- und Transportvorrichtung beispielsweise auf Teppichböden verwendet, sind Rollkörper mit einer etwas größeren Auflagefläche dem punktuellen Kontakt einer Kugel vorzuziehen. Ähnliche Anforderungen können zum Beispiel auch beim Einsatz auf einem Holzparkett gegeben sein.

Ist der mindestens eine Rollkörper den Laufrädern nachlaufend am Steigbein vorgesehen, das heißt, er liegt bei normaler nach vorne gerichteter Fahrtrichtung hinter den Lauf- und Lenkrädern, so verleiht dies der Treppensteig- und Transportvorrichtung eine besonders hohe Kippstabilität. Dies ist darin begründet, dass sich die Rollkörper durch den Nachlauf an weiter außen liegenden Punkten abstützen als dies normalerweise durch die Laufräder gegeben ist. Deshalb erhöht sich die Stabilisierung der Treppensteig- und Transportvorrichtung zusätzlich.

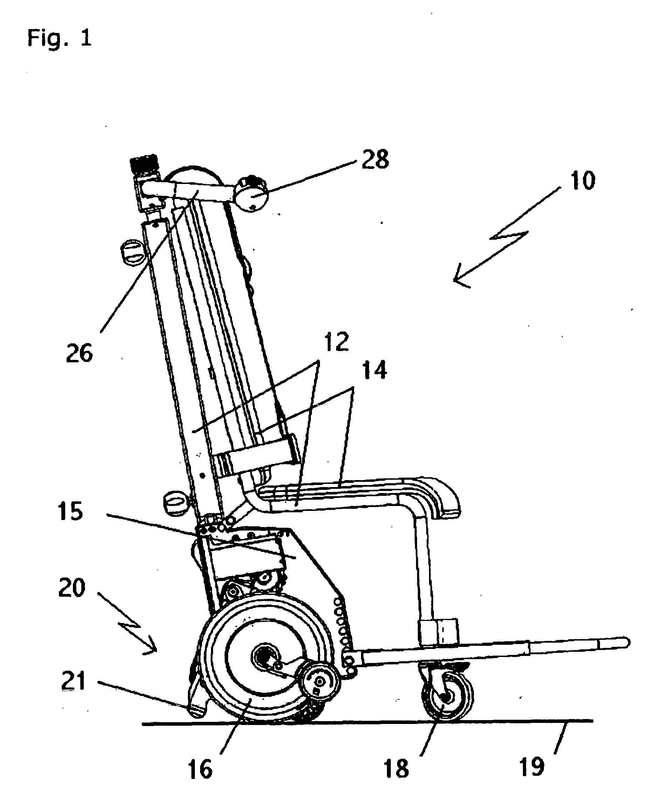

Die Erfindung ist in einem Ausführungsbeispiel in den Figuren 1 bis 3 dargestellt und wird in der nachfolgenden Figurenbeschreibung näher erläutert. Alle Merkmale der Erfindung sind stark schematisiert dargestellt und sind nicht maßstäblich zu verstehen. Die Erfindung beschränkt sich nicht auf die vorstehend angegebenen Ausführungsbeispiele. Vielmehr ist eine Anzahl von Varianten denkbar, welche auch bei grundsätzlich anders gearteter Ausführung von den Merkmalen der Erfindung Gebrauch machen.

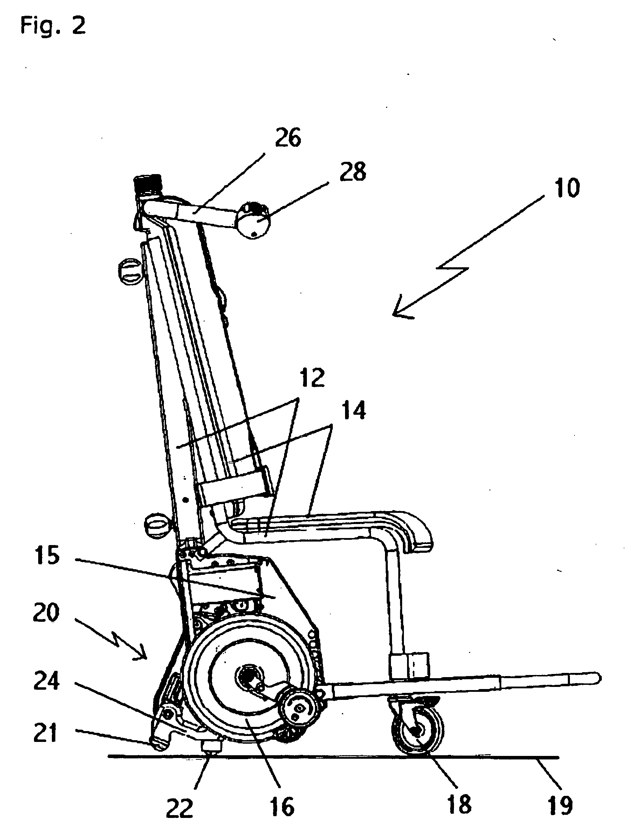

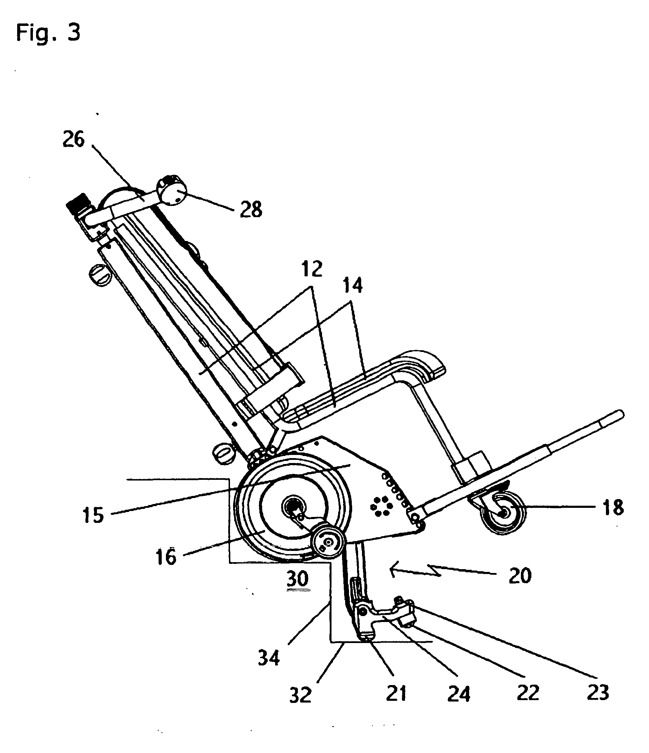

Die Figuren 1 bis 3 stellen die erfindungsgemäße Treppensteig- und Transportvorrichtung jeweils in der Seitenansicht dar. Die Figur 1 und 2 zeigt die Treppensteig- und Transportvorrichtung jeweils bei deren Einsatz auf einer Ebene, wobei in der Figur 1 die erste Lage mit auf der Bodenoberfläche aufliegendem Laufrad dargestellt ist. In der Figur 2 ist die zweite Lage gezeigt, die sich dadurch auszeichnet, dass das Laufrad von der Bodenoberfläche beabstandet ist und die Treppensteig- und Transportvorrichtung über die Rollkörper und die Lenkräder auf der Bodenoberfläche aufliegt. Schließlich zeigt die Figur 3 eine Momentaufnahme während des Treppenauf- oder Treppenabstiegs.

In der Figur 1 ist mit 10 eine Treppensteig- und Transportvorrichtung bezeichnet. Diese besteht aus einer Rahmenkonstruktion 12 sowie einer sich daran anschließenden elektromechanischen Treppensteigeinrichtung 15, welche seitlich daran angebrachte Laufräder 16 sowie ein in der Treppensteigeinrichtung 15 gelagertes und teilweise daraus hinausragendes Steigbein 20 aufweist. An der Rahmenkonstruktion 12 ist des Weiteren eine Lastaufnahmeeinrichtung 14 für den zu transportierenden Gegenstand und/oder für die zu transportierende Person vorgesehen sowie zwei Lenkräder 18, die unter anderem zur Richtungsänderung beim Verfahren in der Ebene dienen. Ebenso sind Bedienelemente 28 an der Rahmenkonstruktion 12 vorgesehen, die die Bedienung der elektromechanischen Treppensteigeinrichtung 15 durch den Benutzer ermöglichen oder eine Verstellung/Verlängerung/Verschwenkung der Rahmenkonstruktion 12 erlauben. Das Steigbein 20 weist als erstes Auflager, zumindest bei Belastung, einen drehfesten Stützkörper 21 und als zweites Auflager einen drehbaren Rollkörper 22 auf, der über eine Schraube 23 lösbar an dem die beiden Auflager verbindenden Steg 24 befestigt ist (siehe Fig. 3). In der Figur 1 ist das Steigbein 20 durch die elektromechanische Treppensteigeinrichtung 15 derart verschwenkt worden, dass weder der Stützkörper 21 noch der Rollkörper 22 die Bodenoberfläche 19 berühren. Deshalb liegt das Laufrad 16 auf der Bodenoberfläche 19 auf, und ein bekanntes Verfahren der Treppensteig- und Transportvorrichtung 10 über die Laufräder 16 und die Lenkräder 18 kann erfolgen; allerdings mit einer gewissen Einschränkung in der Mobilität.

In der Figur 2 ist die Treppensteig- und Transportvorrichtung 10 mit auf der Bodenoberfläche 19 aufliegenden Rollkörpern 22 gezeigt. Das Steigbein 20 ist dabei derart von der Treppensteigeinrichtung 15 verfahren worden, dass die Stützkörper 21 von der Bodenoberfläche 19 beabstandet bleiben und das Laufrad 16 angehoben wird, um ebenfalls nicht mehr mit der Bodenoberfläche 19 in Kontakt zu stehen. In diesem Zustand ist die Treppensteig- und Transportvorrichtung 10 über die Rollkörper 22 und die Lenkräder 18 auf engstem Raum steuer- und verfahrbar. Es sind beispielsweise Drehungen um die Hochachse an Ort und Stelle, enge Kurvenradien oder auch Parallelverschiebungen der Treppensteig- und Transportvorrichtung 10 möglich.

In der Figur 3 ist die Treppensteig- und Transportvorrichtung 10 in einer Phase des Treppenaufstiegs oder Treppenabstiegs dargestellt. Hierfür wird die Treppensteig- und Transportvorrichtung 10 vom Benutzer über die Handgriffe 26 ergriffen und gegenüber der Horizontalen, in Richtung auf die Treppe 30 zu, abgekippt. In dieser leichten Schräglage beginnt der Treppenauf- oder Abstieg durch das zyklische Abstützen der Stützkörper 21 auf den aufeinander folgenden Trittstufen 32 sowie das synchrone Hochstemmen der Treppensteig- und Transportvorrichtung 10 um die entsprechende Höhe der Setzstufe 34. Der Steg 24 mit angebrachten Rollkörpern 22 berührt dabei weder Setzstufe 34 noch Trittstufe 32.

Die Erfindung betrifft eine Treppensteig- und Transportvorrichtung 10 zum Transport von Gegenständen jedweder Art und/oder Personen, mit einer Rahmenkonstruktion 12, an der neben einer Lastaufnahmeeinrichtung 14 für den zu transportierenden Gegenstand und/oder für die zu transportierende Person Laufräder 16, Lenkräder 18 und Bedienelemente 28 vorgesehen sind. Im Bereich der Laufräder 16 ist mindestens ein Rollkörper 22 vorgesehen, der in einer ersten Lage bei Auflage der Laufräder 16 auf einer Bodenoberfläche 19 von der Bodenoberfläche 19 beabstandet ist, und in einer zweiten Lage auf der Bodenoberfläche 19, die Last der Treppensteig- und Transportvorrichtung 10 aufnehmend, aufliegt und dabei gleichzeitig die Laufräder 16 von der Bodenoberfläche 19 beabstandet sind. Am freien Ende eines Steigbeins 20 sind zwei voneinander beabstandete Auflager vorgesehen, wobei ein erstes Auflager in einem drehfesten Stützkörper 21 endet und ein zweites Auflager den drehbaren Rollkörper 22 aufweist.

## Patentansprüche

1. Treppensteig- und Transportvorrichtung (10) zum Transport von Gegenständen jedweder Art und/oder Personen, mit einer Rahmenkonstruktion (12), an der neben einer Lastaufnahmeeinrichtung (14) für den zu transportierenden Gegenstand und/oder für die zu transportierende Person Laufräder (16), Lenkräder (18) und Bedienelemente (28) vorgesehen sind, wobei im Bereich der Laufräder (16) mindestens ein Rollkörper (22) vorgesehen ist, der in einer ersten Lage bei Auflage der Laufräder (16) auf einer Bodenoberfläche (19) von der Bodenoberfläche (19) beabstandet ist, und in einer zweiten Lage auf der Bodenoberfläche (19), die Last der Treppensteig- und Transportvorrichtung (10) aufnehmend, aufliegt und dabei gleichzeitig die Laufräder (16) von der Bodenoberfläche (19) beabstandet sind,
**dadurch gekennzeichnet, dass**
am freien Ende eines Steigbeins (20) zwei voneinander beabstandete Auflager vorgesehen sind, wobei ein erstes Auflager in einem drehfesten Stützkörper (21) endet und ein zweites Auflager den drehbaren Rollkörper (22) aufweist, wobei das erste Auflager in zwei voneinander beabstandeten Stützkörpern (21) endet, die zum zyklischen Abstützen auf aufeinander folgenden Trittstufen (32) sowie synchronen Hochstemmen der Treppensteig- und Transportvorrichtung (10) um die entsprechende Höhe der Setzstufe (34) ausgebildet sind.

2. Treppensteig- und Transportvorrichtung (10) nach Anspruch 1,
**dadurch gekennzeichnet, dass**
das zweite Auflager zwei voneinander beabstandete Rollkörper (22) aufweist.

3. Treppensteig- und Transportvorrichtung (10) nach einem der vorhergehenden Ansprüche, **dadurch gekennzeichnet, dass** ein zwischen erstem und zweiten Auflager ausgebildeter Steg (24) oder zwischen ersten und zweiten Auflagern ausgebildete Stege (24) eine abgewinkelte Form aufweisen.

4. Treppensteig- und Transportvorrichtung (10) nach Anspruch 1,
**dadurch gekennzeichnet, dass**
der mindestens eine Rollkörper (22) an dem zweiten Auflager lösbar vorgesehen ist.

5. Treppensteig- und Transportvorrichtung (10) nach einem der vorhergehenden Ansprüche,
**dadurch gekennzeichnet, dass**
der mindestens eine Rollkörper (22) über eine drehbare Kugel, ein Rad, einen Wälzkörper oder dergleichen auf der Bodenoberfläche (19) aufliegt.

6. Treppensteig- und Transportvorrichtung (10) nach einem der vorhergehenden Ansprüche,
**dadurch gekennzeichnet, dass**
der mindestens eine Rollkörper (22) den Laufrädern (16) nachlaufend am Steigbein (20) vorgesehen ist.

## Claims

1. Stair-climbing and transport device (10) for transporting articles of any kind and/ or persons, comprising a frame construction (12) provided with a load-carrying device (14) for the article to be transported and/or for the person to be transported, as well as running wheels (16), steering wheels (18) and operating elements (28), wherein at least one rolling body (22) is provided in the region of the running wheels (16), said rolling body, in a first position with the running wheels (16) resting on a floor surface (19), being disposed at a distance from the floor surface (19) and, in a second position, resting on the floor surface (19) and carrying the load of the stair-climbing and transport device (10) while the running wheels (16) are disposed at a distance from the floor surface (19), **characterised in that** two supports disposed at a distance from one another are provided at the free end of a climbing leg (20), wherein a first support ends in a torsionally rigid supporting body (21) and a second support comprises the rotatable rolling body (22) and wherein the first support ends in two supporting bodies (21) disposed at a distance from one another designed to provide temporary support on each successive stair tread (32) and to synchronously raise the stair-climbing and transport device (10) by an amount corresponding to the height of the stair riser (34).

2. Stair-climbing and transport device (10) according to claim 1, **characterised in that** the second support comprises two rolling bodies (22) disposed at a distance from one another.

3. Stair-climbing and transport device (10) according to one of the preceding claims, **characterised in that** a web (24) provided between the first and second supports or webs (24) provided between the first and second supports has/have an angled shape.

4. Stair-climbing and transport device (10) according to claim 1, **characterised in that** the at least one rolling body (22) is provided removably on the second support.

5. Stair-climbing and transport device (10) according to one of the preceding claims, **characterised in that** the at least one rolling body (22) rests on the floor surface (19) by means of a rotatable ball, a wheel, a roller body or the like.

6. Stair-climbing and transport device (10) according to one of the preceding claims, **characterised in that** the at least one rolling body (22) is provided on the climbing leg (20) behind the rolling wheels (16).

## Revendications

1. Dispositif monte-escalier et de transport (10) pour le transport d'objets de tout type et/ou de personnes, avec une construction de châssis (12) sur laquelle, outre un dispositif de réception de charge (14) pour l'objet à transporter et/ou pour la personne à transporter, il est prévu des roues de roulement (16), des roues directrices (18) et des éléments de manoeuvre (28), au moins un corps roulant (22) étant prévu dans la zone des roues de roulement (16), corps roulant qui, dans une première position correspondant à l'appui des roues de roulement (16) sur une surface de sol (19), est distant de la surface de sol (19), et qui, dans une deuxième position correspondant à la réception de la charge du dispositif monte-escalier et de transport (10) repose sur la surface de sol (19), tandis que les roues de roulement (16) sont dans le même temps distantes de la surface de sol (19),
**caractérisé en ce que**
à l'extrémité libre d'une jambe de montée (20), il est prévu deux appuis distants l'un de l'autre, un premier appui se terminant dans un corps de support (21) bloqué en rotation, et un deuxième appui présentant le corps roulant (22) rotatif,
le premier appui se terminant dans deux corps de support (21) distants l'un de l'autre qui sont constitués pour reposer de façon cyclique sur des marches d'escalier (32) successives ainsi que pour le soulèvement synchrone du dispositif monte-escalier et de transport (10) sur la hauteur correspondante de la contremarche (34).

2. Dispositif monte-escalier et de transport (10) selon la revendication 1,
**caractérisé en ce que**
le deuxième appui présente deux corps roulants (22) distants l'un de l'autre.

3. Dispositif monte-escalier et de transport (10) selon une des revendications précédentes,
**caractérisé en ce**
**qu'**une entretoise (24) constituée entre le premier appui et le deuxième appui ou des entretoises (24) constituées entre des premiers appuis et des deuxièmes appuis présentent un forme coudée.

4. Dispositif monte-escalier et de transport (10) selon la revendication 1,
**caractérisé en ce que**
le corps roulant (22) au moins au nombre de un est prévu de façon détachable sur le deuxième appui.

5. Dispositif monte-escalier et de transport (10) selon une des revendications précédentes,
**caractérisé en ce que**
le corps roulant (22) au moins au nombre de un repose sur la surface de sol (19) par le biais d'une bille rotative, d'une roue, d'un corps de rouleau ou similaire.

6. Dispositif monte-escalier et de transport (10) selon une des revendications précédentes,
**caractérisé en ce que**
le corps roulant (22) au moins au nombre de un est prévu sur la jambe de montée (20) dans la suite des roues de roulement (16).
